# EUROPEAN PATENT APPLICATION

(11) **EP 2 020 553 A2**
(43) Date of publication of application: **04.02.2009**
(21) Application number: 08160823.4
(22) Date of filing: 21.07.2008
(51) Int. Cl.: F16L 13/14

(54) **Axial swage connectors**

(30) Priority: 30.07.2007 GB 0714801
(71) Applicant: Cold Work Technology Limited, 66 Queens Road Aberdeen Aberdeenshire, AB15 6YE (GB)
(72) Inventor: Westland, Andrew, Aberdeen, Aberdeenshire AB15 4YE (GB)
(74) Representative: Hedges, Martin Nicholas

(57) **Abstract**

An axial swage connector comprises an annular coupling body (2) having an axially extending cylindrical aperture extending from one end (5) for receiving a pipe end and a profiled external circumferential surface, and an anchoring ring (3) having a profiled inner circumferential surface. The external circumferential surface of the body (2) has an outwardly extending tail (17) at the one end (5) of the body (2) and the circumferential surface of the cylindrical aperture has at least one tooth (7,9,11,13) projecting radially inwardly therefrom. The inner surface of the ring (3) has at least one ramp surface (33,35). The ring (3) is axially slidable onto the body (2) and imparts a compressive load on the body (2) so as to deform at least a first tooth (9,11,13) radially inwardly, thereby, biting into the outer surface of a pipe end. A first ramp (35) surface on the inner surface of the ring (3) cooperates with the tail (17) formed at the one end (5) of the body (2) to deform it inwards and then cause it to flare back outwards as the ring (3) passes thereover to a greater diameter than the internal diameter of the inner surface of the ring (3) at its trailing face (37), thereby preventing removal of the ring (3) from the body (2).

## Description

The present invention relates to axial swage connectors for connecting pipe ends together.

Axial swage connectors are well known in the art and typically comprise an axially extending, annular coupling body and a pair of swage rings. The interior surface of the coupling body typically has an internal shoulder at an axially central location and axially spaced, circumferentially extending sealing teeth located on either side of said internal shoulder. The exterior surface, on the other hand, is formed with a camming surface which co-operates with an inner swaging surface formed on the inner cylindrical surface the swage ring which is pressed onto the coupling body so as to deform the coupling body radially inwards. In use, then, a pipe end is inserted into one end of the connector body so as to abut against the internal shoulder, and a swage ring is then pressed onto the outer surface of the coupling body. The camming action between the ring and the coupling body coverts the axial load applied to the ring into a radial force which deforms the teeth inwards, pressing them against the outer surface of the pipe and hence securing it within the coupling body.

However, known axial swage connectors suffer from the disadvantage that the connection they create is not completely reliable. In particular, the swage rings have been known to slide back out of position, thus compromising the integrity of the connection. Furthermore, the seal which is formed between the pipe and the coupling body has been found not to meet the standards which are set for modem applications.

According to the invention, there is provided an axial swage connector comprising an annular coupling body having an axially extending cylindrical aperture extending from one end for receiving a pipe end and a profiled external circumferential surface, and an anchoring ring having a profiled inner circumferential surface;
the external circumferential surface of the body having an outwardly extending projection forming a tail at the one end of the body and the circumferential surface of the cylindrical aperture having at least one tooth projecting radially inwardly therefrom;
the inner surface of the ring extending from a leading face to a trailing face of the ring, the inner surface having a larger diameter at the leading face than at the trailing face and having at least one ramp surface located between the leading and trailing faces which tapers inwardly toward the trailing face;
the ring being axially slidable onto the body, leading face first, so as to bring the inner surface of the ring into engagement with the external surface of the body, the profiling thereof developing a camming action which imparts a compressive load on the body so as to deform at least a first tooth radially inwardly, thereby, in use, biting into the outer surface of a pipe end inserted into the cylindrical aperture in the body;
wherein a first ramp surface on the inner surface of the ring cooperates with the tail formed at the open end of the body to deform it inwards and then cause it to flare back outwards as the ring passes thereover to a greater diameter than the internal diameter of the inner surface of the ring at the trailing face, thereby preventing removal of the ring from the body.

An axial swage connector in accordance with the invention has the advantage that as the ring is pressed onto the coupling body, the end of the coupling body is deformed in such a way that the ring is locked in position, being prevent from being removed from or sliding off the coupling body. More particularly, the end of the coupling body is formed with a fish shaped "tail" which "kicks out" as the ring passes thereover, the diameter at the tail end of the body swelling, driven up by the opposing force of the pipe, to a diameter larger than the bore of the ring so that the ring is prevented from being removed.

Preferably, the inner surface of the ring at the trailing face has a smaller diameter than the outermost diameter of the tail. In particular, the tail desirably comprises a ramp section tapering outwardly from the one end of the body and a subsequent relief section tapering back inwardly, the relief section of the tail preferably tapering inwardly at a steeper angle than the ramp section extends outwardly.

Desirably, the cylindrical aperture of the body furthermore has at least a second tooth projecting radially inwardly therefrom and being positioned such that the deformation of the tail inwards as the ring is slid onto the body also causes said at least second tooth to deform inwards and, in use, sealingly engage with the pipe in the same manner as the at least first tooth.

Preferably, the inner surface of the ring comprises a second ramp, spaced between the first ramp and leading end and extending outwardly towards said leading end, and the external circumferential surface of the body comprises a first ramp that is spaced away from the one end and extends outwardly therefrom, the second ramp of the ring co-operating with the first ramp of the body to develop the camming action that deforms the at least first tooth. Desirably, the second ramp of the ring tapers at a shallower angle than the first ramp of the body.

Preferably, the inner surface of the ring has a further taper, which acts as a secondary locking feature, the diameter of the body relaxes back behind the diameter of the taper due to a reaction force from the pipe so as to ensure that the ring cannot drift off the coupling body once assembled.

Desirably, said further taper is a third ramp surface on the ring that connects the first and second ramps and tapers outwardly towards the trailing edge, at a shallower angle than the first and second ramps, and the external surface of the body comprises a co-operating section of similar length to said third ramp of the ring which extends from the tip of the first ramp and tapers inwardly away from the one end. Advantageously, the co-operating section furthermore comprises two lands sandwiching the relief, a first relatively short land extending from the tip of the first ramp of the ring and a second relatively long land extending from the tip of the relief.

Preferably, the external circumferential surface of the body comprises a groove therein distal to the one end over which, in use, the second ramp of the ring extends. Desirably, said groove extends from the end of the co-operating section.

Preferably, the inner cylindrical surface of the coupling body has no internal shoulder and is instead of a "straight through" design. This has the advantage that the connector can more easily be fitted between existing pipes because it is not necessary to axially separate the ends of the pipes to be connected to locate the coupling body therebetween. Instead, it is merely necessary for the pipe ends to be laterally moveable relative to each other to expose completely one end of one of the pipe. The coupling body is then slid completely onto this exposed end, this being possible due to the straight through design, and the ends of the pipes then re-aligned, whereupon the coupling body is slid back so as extend across the two ends.

Preferably, the at least one tooth comprises a ramp section, a land section and a sharp leading edge so as, in us, to ensure proper grip on the pipe. In particular, too much land results in a major increase in effort required to form a seal, and this increased effort can affect the longevity of the fitting and also reduce tool life. Preferably, the angle of the ramp section is between 29° and 35°, preferably 32°, such that if the pipe tries to 'pull out' of the fitting under pressure the ramp angle ensures the at least one tooth digs in further, improving the seal. Reducing said ramp angle behind leads to an increase in effort to form a seal, whereas increasing it produces a weakened edge, which could result in the at least one tooth being shaved, damaged or broken, thus rendering the seal ineffective.

Preferably, the material used and the fittings is able to maintain its mechanical properties at low temperatures i.e. down to -46°C, and the heat treatment range controls properties to meet NACE MR0175. These attributes ensure the product is PED complied.

Preferably, the coupling body takes the form of one of a straight coupler, a flange and a shape, which includes T joints and elbows joints. These have the advantage that they enable coupling without the need for welding, so are not subject to additional non-destructive testing. They are also able to perform in areas where welded parts are not usable.

In a preferred embodiment, the external circumferential surface of the body has a profile that extends away from the tail and one end via a ramp that tapers outwardly a short distance, then a ramp that extends outwardly at a shallower angle than the previous ramp substantially back to the same diameter as the radially outermost point of the tail, then a ramp that extends outwardly again at a steeper angle than the previous ramp, than a relatively short axially extending land, then a relief that extends inwardly at a much shallower angle than the previous ramp, then an axially extending land, then a relief that extends inwardly at a steeper angle than the previous relief, then a ramp that extends back out a steeper angle than the previous relief, and then an axially extending third land.

It will be understood, though, that the general profile of the external circumferential surface of the body recited in the preceding paragraphs has inventive merit in its own right, separately from the tail feature.

In order that the invention may be well understood, there will now be described an embodiment thereof, given by way of example, reference being made to the accompanying drawings, in which:
FIGURE 1 is a partial cross-sectional view of a connecting body according to the invention;
FIGURE 2 is a partial cross-sectional view of the connecting body of Figure 1 in which the features of its profile are emphasised for clarity;
FIGURE 3 is a partial cross-sectional view of a swage ring according to the invention; and
FIGURES 4 to 7 are partial cross-sectional views of the swage ring of Figure 2 during various stage of engagement with the connector body of Figure 1.

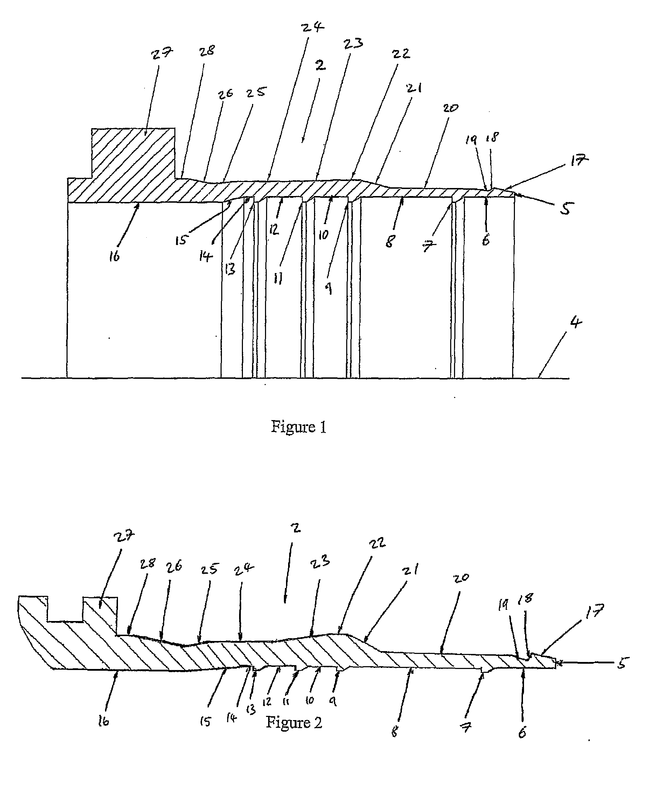

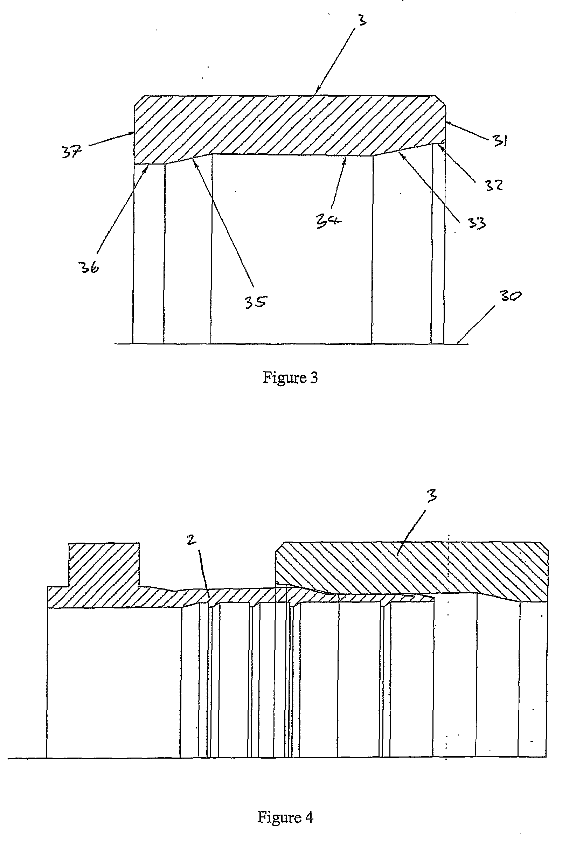

Referring first to figure 1, there is shown a partial sectional view of a coupling end of a coupling body 2 of a swage connector 1 for coupling together two low temperature pipes. The body 2 is preferably made from AISI 4140 alloy steel and is used in connection with a swaging ring 3 as shown in Figure 3.

The coupling end of the coupling body 2 is formed as a cylindrical stud which extends from a central outer shoulder 27 that forms a stop for the swaging ring 3 as described below, the central aperture of the coupling end being sized to receive an end of a pipe therein. Both the exterior and interior cylindrical surfaces of the coupling end are formed with a number of lands and ramps/reliefs, the lands being substantially parallel to the axis of rotation 4 and the ramps/reliefs being angled to said axis of rotation 4.

The internal profile of the coupling end, which is shown in more detail in Figure 2, is formed with a generally straight first section which extends axially from the open end 5 of the coupling body towards the outer shoulder 27, on which are formed a number, four in the illustrated embodiment, of radially inwardly extending teeth 7, 9, 11, 13. Each tooth is defmed by a ramp surface, which tapers radially inwardly in the direction of the outer shoulder 27, a land, which from the radially inner end of the ramp towards the outer shoulder 27, and a shoulder, which extends radially outwardly from the end of the land, perpendicularly thereto. The shoulders of the first, third and fourth teeth 7, 11, 13 each extend back to the same diameter as the radially outer end of their ramp surface, so there is no overall change in the internal diameter across these teeth. The second tooth 9, however, has a shoulder which extends radially outwardly further than the radially outer end of its ramp surface so there is an overall increase in the internal diameter across the second tooth 9.

The teeth 7, 9, 11, 13, are spaced from each other and from the open end 5 of the body 2 by lands 6, 8, 10, 12. A land 14 extends from the bottom of the shoulder of the fourth tooth 13 to a further ramp 15 which forms a radially inwardly tapering section in the profile, the ramp 15 ending at a further land 16 whose radius is smaller than the radius of the lands of the teeth 7, 9, 11, 13 and which extends under the outer shoulder 27.

In one embodiment, the internal diameter of the open end 5 of the body is 35mm, and the first tooth 7 is axially space from the open end 5 by a distance of 4.8mm. The ramp of the first tooth 7 extends 0.8mm in the axial direction to a diameter of 34.10mm, its land extends 0.4mm and shoulder extends radially back to a diameter of 35.00mm. The land 8 separating the first and second teeth 7, 9 is 8.8mm.

The size of the second tooth 9 in the same as the first tooth 7 except the shoulder is longer, extending radially back to a diameter of 35.67mm. The land 10 separating the second and third teeth 9, 11 is 3.3mm, the land 12 separating the third and fourth teeth 11, 13 is 3.3mm and the land 14 adjacent the fourth tooth 13 remote from the third tooth 11 is 1.0mm. The third and fourth teeth 11,13 are identical in size to the first tooth 7, the shoulder in each case returning to a diameter of 35.67mm. The ramp 15 then extends axially 3mm to a diameter of 34.00mm, and the land 16 extends 28.05mm to the axial centre point of the shoulder 27.

The outer swaging profile of the coupling end, which is also shown in more detail in Figure 2, tapers outwardly in a first ramp 17 from its open end 5 in the direction of the shoulder before tapering back inwards via a first relief 18 at a steeper angle than the outward taper of ramp 17 so as to form a tail at the open end 5. The surface then tapers outwardly again a short distance via a second ramp 19 at a an angle which is shallower than the taper angle of the first ramp 17 to a third ramp 20 which tapers outwardly at a much shallower angle than the preceding adjacent tapering section (almost parallel to the longitudinal axis) back to the same diameter as the radially outer end of the first ramp 17 of the tail.

A fourth ramp 21 extends from the third ramp 20, tapering outwardly at a steeper angle than the section 20 to a short land 22. The surface then tapers inwardly via a second relief 23at a much shallower angle than the taper angle of the fourth ramp 21 (almost parallel to the longitudinal axis) to a land 24. A third relief 25 then extends from the land 24, tapering inwardly at a steeper angle than the fourth ramp 2, before the surface tapers back out via a fifth ramp 26 at a steeper angle than the third relief 25. A land 28 then leads form the fifth ramp 26 to the shoulder 27.

In one embodiment, the outer diameter of the open end 5 of the body is 35.9mm and the first ramp 17 extends 2.0mm therefrom in the axial direction to a diameter of 36.75mm. The first relief 18 then extends 0.5mm in the axial direction to a diameter of 36.25mm before the second ramp 19 extends 1.5mm in the axial direction to a diameter of 36.55mm and the third ramp 20 extends 7.93mm in the axial direction to a diameter of 36.75mm. Following the third ramp 20, the fourth ramp 21, which extends 2.87mm in the axial direction to a diameter of 38.25mm, leads to the land 22, which extends for 2mm. The second relief 23, which extends 5mm in the axial direction to a diameter of 38.00mm, then leads to the land 24, which extends for 4.7mm, before the third relief extends 2.5mm in the axial direction to a diameter of 37.60mm and the fifth ramp 26 extends 2.5mm in the axial direction to a diameter of 38.60mm. The land 28 then extends 3.7mm to the shoulder 27.

Referring next to figure 3, there is shown a sectional view of a swaging ring 3 of the swage connector 1, the ring 3 having a leading end 31, a trailing end 37 and a central aperture that is sized to engage with the outer profile of the coupling end of the coupling body 2, leading edge 31 first. Both the exterior and interior cylindrical surfaces of the coupling end are formed with a number of lands and ramps/reliefs, the lands being substantially parallel to the axis of rotation 3 0 and the ramps/reliefs being angled to said axis of rotation 30.

The internal profile of the swaging ring 3 is formed with a first land 32 which extends axially from the leading end 31 towards the trailing end 37 and leads to a first ramp 33, which tapers radially inwardly in the direction of the trailing end 37. The surface then tapers outwardly via a first relief 34 at an angle which is much shallower than the taper angle of the first ramp 33 (almost parallel to the longitudinal axis). A third ramp 35, at an angle that is slightly greater than taper angle of the first ramp 33, then leads from the second ramp 34 to a second land 36, which in turn extends to the trailing end 37.

In one embodiment, the outer diameter of the leading end 31 of the swaging ring 3 is 38.98mm, the first land 32 extends for 1.25mm, the first ramp 33 extends 5.75mm in the axial direction to a diameter of 36.6mm, the second ramp 34 extends for 15.5mm to a diameter of 37mm, the third ramp 35 extends 4.5mm in the axial direction to a diameter of 35.00mm, and the second land 36 extends for 3mm.

The external profile of the swaging ring 3 is substantially cylindrical. In one embodiment, the external profile has a diameter of 48.30mm and 45° chamfered ends.

In use, one swage ring 3 is slid over each pipe end that is to be connected via the connector body 2. The pipe ends are then inserted into the opposing open ends 5 of the connector body 2 such that they abut at a substantially axially central point thereof, and each swage ring 3 is then slid over its respective open end 5 of the connector 2 and pressed towards the shoulder 27, either manually or using a suitable tool, the interaction between the inner profile of the ring 3 and the outer profile of the connector body 2 developing a camming action that presses the teeth 7, 9, 11, 13 inwards, causing them to bit into the pipe ends, thus securing them together in a sealing manner.

Referring to Figures 4-7, there are shown partial cross-sectional views of the swage ring 3 during various stages of engagement with the connector body 2.

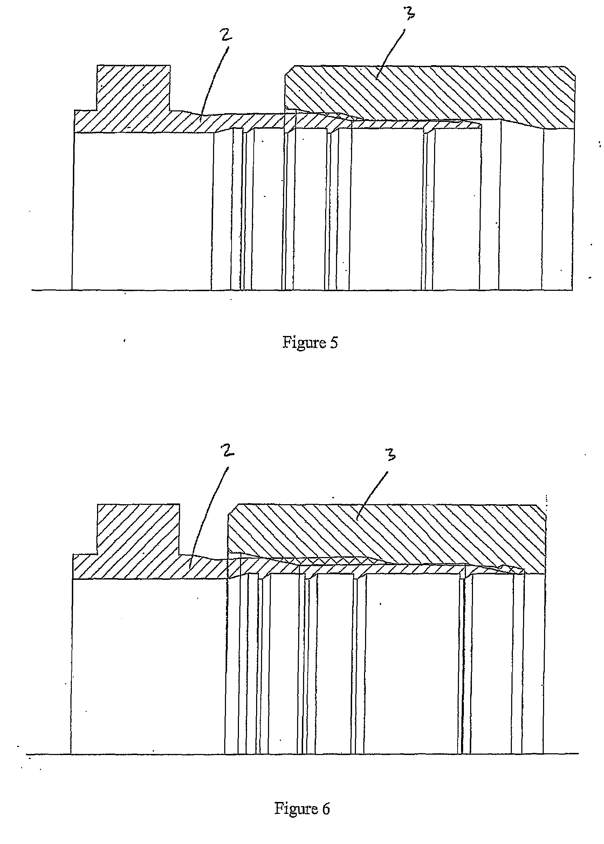

As the swage ring 3 is pushed from the open end 5 of the connector 2 towards the shoulder 27, it proceeds substantially unobstructed until the ramp 33 of the ring 3 comes into contact with the ramp 21 of the connector body 2, as illustrated in Figure 4. Subsequently, the ramp 33 generates pressure on the ramp 21 of the body 2 as it is pushed thereover, moving the second tooth 9 of the connector body 2 to contact the pipe, as illustrated in Figure 5. As the ring 3 is pushed further towards the shoulder 27, pressure on the second tooth 9 builds, forcing it well down into the pipe so as to form a seal.

As the relief 34 of the ring 3 passes over the ramp 21 of the connector body 2, it proceeds to force the third and fourth teeth 11, 13 into sealing engagement with the pipe as well, the slight taper thereof allowing the initial push of the teeth 9,11,13 into the pipe to reduce a little. This allows the seal between pipe and connector body 2 to form a consistent seal without being over-stressed. It also doubles as a locking feature, ensuring the ring 3 does not vibrate off the body 2 during service.

The ring 3 then continues over the connecter body 2 until the ramp 35 on the ring 3 engages against the ramp 17 of the connector body 2, as illustrated in Figure 6. As the ramp 35 is then pushed over the ramp 17, it generates pressure thereon that forces the first tooth 7 into the pipe, thus providing a further seal.

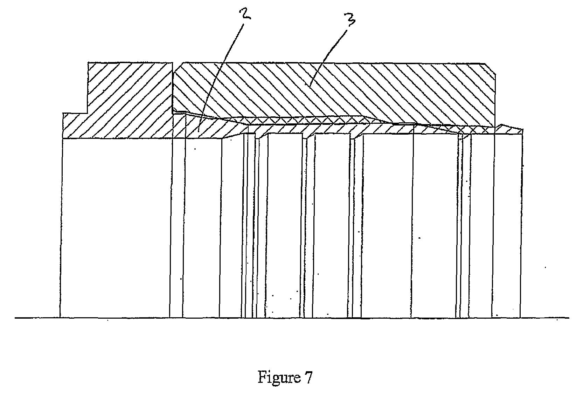

Subsequently, the land 36 of the ring 3 passes over the ramp 17 of the connector 2 and, as the ring 3 reaches its fully assembled position, in which its leading end 31 abuts the shoulder 27 of the connector body 2 and land 32 of the ring 3 locates over the 28 of connector body 2, the trailing end 3 7 of the ring 3 passes over the ridge of the ramp 17 and into the groove created by the relief 18 and ramp 19 (see Figure 7), whereby the upward pressure from the compressed first tooth 7 forces the material of the ramp 17 to flare outwardly behind the ring 3 such that said ring 3 becomes locked in its fully assembled position and, in use, cannot slide off. This is the primary locking feature of the swage connector assembly 1, and, once the ring 3 is locked in said fully assembled position, the land 3 6 acts to maintain pressure on the first tooth 7, thus maintaining its seal with the pipe.

In this way, then, each ring 3 is engageable over an end of the connector 2 to cause a crimping action, which, in turn, causes the teeth 7, 9, 11, 13 of the connector body 2 to sealingly engage into the pipe ends, thus securing them together. The locking mechanisms then act to maintain each swage ring 3 in its fully assembled position such that the seal between connector body 2 and pipe ends cannot be compromised by a ring 3 coming loose.

The tolerance of the linear dimensions of the swage connector assembly 1 is +/-0.13mm as the outer diameter of the ring 3 has to remain within limits to allow flexure during assembly. If the outer diameter is above the upper limit in diameter, the connector body 2 is forced into the pipe during assembly and subsequently held under great stress, as the ring 3 has no growth potential - small movement/flexure helps the assembly 1 to work without stress. However, if the outer diameter of the ring 3 is too small, it is unable to put sufficient force on the profile of the connector body 2. Rather, it simply swells without further definitive pressure on the pipe such that is doesn't form a reliable seal.

Referring to the outer surface of the connector body 2, the land 22, which follows the ramp 21, allows the ring 3 to glide over the profile of the connector body 2. If the land 22 is reduced, the corner becomes too sharp and can cause the bore of the ring 3 to be reduced via a shaving effect. If the land is too large, on the other hand, too much friction is created and this can lead to the assembly 1 seizing up, not assembling properly and potential failure.

The relief 23, which follows the land 22, reduces the pressure and resistance on the ring 3 as it progresses forward over the connector body 2. If the angle is too steep, the strength in the body is reduced, together with the sealing properties of the teeth 9, 11, 13 below.

The subsequent land 24 is for maintaining strength in the connector body 2 until the rings 3 have passed the last of the teeth 9, 11, 13 on their way to the fully assembled position, and the following groove formed by the relief 25 and ramp 26 is the final relief for the ring 3. If said groove is made steeper, i.e. forming more of a groove in the connector body 2, the section is greatly weakened and can result in a material collapse at this point under pressure from the ring 3, which is forcing the teeth 7, 9, 11, 13 of the body down into the pipe. In turn, this can lead to the ring 3 removing material from the ridge of ramp 17 of the connector body 2 during assembly to the extent that said ramp 17 can no longer flare back out to its full position. Accordingly, the ring 3 may then not only fail to seal the pipe correctly, but would also be unlikely to remain in place during service.

Referring to the inner surface of the connector body 2, the first tooth 7, which forms the first of four seals and has substantially the same form as the second, third and fourth teeth 9, 11, 13, is positioned to assist in the flaring action needed to ensure the primary locking mechanism works.

The second, third and fourth teeth 9, 11, 13 are three further sealing areas providing the main grip on the tube. They ensure it is unable to twist or turn and have a sharp leading edge to ensure proper grip. Too much land at the tip of the teeth 9, 11, 13 results in a maj or increase in effort required to form a seal, and this increased effort can affect the longevity of the fitting and also reduce tool life.

The angle behind the land of each tooth 9, 11, 13 is to give strength. If the pipe tries to 'pull out' of the fitting under pressure the angle ensures the tooth 9,11,13 digs in further, improving the seal. Reducing said angle behind the land of the tooth leads to an increase in effort to form a seal, whereas increasing said angle produces a weakened edge to the teeth 9, 11, 13, which could result in the tooth being shaved, damaged or broken, thus rendering the seal ineffective.

Finally, it will be appreciated that many different variations of the described embodiment is possible. For example, the assembly 1 can alternatively be made from 316 stainless steel, Duplex, Super-Duplex, 6MO, Cu/Ni 90/10, Cu/Ni 70/30, alloy C276, alloy 625, alloy 400 - indeed, any material suitable for the pipes they are for use with. Furthermore, the assembly 1 can also be made for use with both tubes and pipe of varying sizes.

## Claims

1. An axial swage connector comprising an annular coupling body having an axially extending cylindrical aperture extending from one end for receiving a pipe end and a profiled external circumferential surface, and an anchoring ring having a profiled inner circumferential surface;
the external circumferential surface of the body having an outwardly extending projection forming a tail at the one end of the body and the circumferential surface of the cylindrical aperture having at least one tooth projecting radially inwardly therefrom;
the inner surface of the ring extending from a leading face to a trailing face of the ring, the inner surface having a larger diameter at the leading face than at the trailing face and having at least one ramp surface located between the leading and trailing faces which tapers inwardly toward the trailing face;
the ring being axially slidable onto the body, leading face first, so as to bring the inner surface of the ring into engagement with the external surface of the body, the profiling thereof developing a camming action which imparts a compressive load on the body so as to deform at least a first tooth radially inwardly, thereby, in use, biting into the outer surface of a pipe end inserted into the cylindrical aperture in the body;
wherein a first ramp surface on the inner surface of the ring cooperates with the tail formed at the one end of the body to deform it inwards and then cause it to flare back outwards as the ring passes thereover to a greater diameter than the internal diameter of the inner surface of the ring at the trailing face, thereby preventing removal of the ring from the body.

2. An axial swage connector claim 1 wherein the inner surface of the ring at the trailing face has a smaller diameter than the outermost diameter of the tail.

3. An axial swage connector claims 1 or 2 wherein the tail comprises a ramp section tapering outwardly from the one end of the body and a subsequent relief section tapering back inwardly.

4. An axial swage connector according to claim 3 wherein the relief section of the tail tapers inwardly at a steeper angle than the ramp section extends outwardly.

5. An axial swage connector according to claim 4 wherein the angle of the ramp section of the tail is between 10.5° and 13.5°, preferably 12°, to the horizontal, and the relief section of the tail is between 25.5° and 28.5°, preferably 27°, to the horizontal.

6. An axial swage connector according to any of the previous claims wherein the angle of the first ramp surface on the inner surface of the ring is between 10° and 16°, preferably 13 °, to the horizontal.

7. An axial swage connector according to any of the previous claims, wherein the cylindrical aperture of the body furthermore has at least a second tooth projecting radially inwardly therefrom and being positioned such that the deformation of the tail inwards as the ring is slid onto the body also causes said at least second tooth to deform inwards and, in use, sealingly engage with the pipe in the same manner as the at least first tooth.

8. An axial swage connector according to any of the previous claims wherein the inner surface of the ring comprises a second ramp, spaced between the first ramp and leading end and extending outwardly towards said leading end, and the external circumferential surface of the body comprises a first ramp that is spaced away from the one end and extends outwardly therefrom, the second ramp of the ring co-operating with the first ramp of the body to develop the camming action that deforms the at least first tooth.

9. An axial swage connector according to claim 8 wherein the second ramp of the ring tapers at a shallower angle than the first ramp of the body.

10. An axial swage connector according to claim 8 or 9, wherein the angle of the second ramp of the ring is between 9° and 15°, preferably 12°, to the horizontal, and the angle of the first ramp of the body is between 11.5° and 16.5°, preferably 14°, to the horizontal.

11. An axial swage connector according to any of the previous claims, wherein the first and second ramps of the ring are connected by a third ramp surface that tapers outwardly towards the trailing edge, at a shallower angle than the first and second ramps, and the external surface of the body comprises a co-operating section of similar length to said third ramp of the ring which extends from the tip of the first ramp and tapers inwardly away from the one end, and more particularly wherein the angle of the third ramp of the ring is between 1° ° and 2.5°, preferably 1°, to the horizontal.

12. An axial swage connector according to claim 11, wherein the co-operating section of the body comprises a relief, the angle of which is between 1° and 2.5°, preferably 1 °, to the horizontal.

13. An axial swage connector according to any of claims 12 wherein the co-operating section furthermore comprises two lands sandwiching the relief, a first relatively short land extending from the tip of the first ramp of the ring and a second relatively long land extending from the tip of the relief.

14. An axial swage connector according to any of the previous claims wherein the external circumferential surface of the body comprises a groove therein distal to the one end over which, in use, the second ramp of the ring extends, the groove preferably comprising a relief, the angle of which is between 3° and 7°, preferably 5°, to the horizontal, and a ramp the angle of which is between 9° and 13°, preferably 11°, to the horizontal.

15. An axial swage connector according any of the previous claims, wherein the external circumferential surface of the body has as a profile that extends away from the tail and one end via a ramp that tapers outwardly a short distance, then a ramp that extends outwardly at a shallower angle than the previous ramp substantially back to the same diameter as the radially outermost point of the tail, then a ramp that extends outwardly again at an steeper angle than the previous ramp, than a relatively short axially extending land, then a relief that extends inwardly at a much shallower angle than the previous ramp, then an axially extending land, then a relief that extends inwardly at a steeper angle than the previous relief, then a ramp that extends back out a steeper angle than the previous relief, and then an axially extending third land.
